# EUROPÄISCHE PATENTSCHRIFT

(11) **EP 0 535 254 B1**
(45) Veröffentlichungstag und Bekanntmachung des Hinweises auf die Patenterteilung: **11.01.1995**
(21) Anmeldenummer: 91113292.6
(22) Anmeldetag: 08.08.1991
(51) Int. Cl.: B29C 49/02

(54) **Vorrichtung zum Herstellen eines Vorformlings zum Blasformen eines Faltenbalges**
Apparatus for making a preform for blowmoulding bellows
Dispositif de fabrication d'une préforme pour moulage par soufflage de soufflets

(43) Veröffentlichungstag der Anmeldung: 07.04.1993
(73) Patentinhaber: OSSBERGER-TURBINENFABRIK GMBH & CO., 91781 Weissenburg (DE)
(72) Erfinder: Linss, Gerhard, W-8832 Weissenburg / Bayern (DE); Ossberger, Karl-Friedrich, Dr., W-8832 Weissenburg (DE)
(74) Vertreter: Kessel, Egbert, Dipl.-Ing.

(56) Entgegenhaltungen:
- DE-A- 3 304 520
- US-A- 3 611 483
- US-A- 4 188 179
- EUROPEAN PLASTICS NEWS Bd. 14, Nr. 9, September 1987, SUTTON, SURREY, GB Seite 52; 'BLOW MOULDING ACCURATE TPR PARTS' "DAS GANZE DOCUMENT"

## Beschreibung

Die Erfindung betrifft eine Vorrichtung zum Herstellen eines rohrähnlichen Vorformlings mit entlang seiner Länge unterschiedlichen Querschnitten zum Blasformen eines Hohlkörpers aus einem thermoplastischen Kunststoff, bei der der Kunststoff zunächst in eine Aussparung einer an einer Ringdüse für den Kunststoff anliegenden Halsform (Spritzwerkzeug) gepreßt und dann unter Entfernen der Halsform von der Ringdüse zu dem Vorformling geformt wird, bei der eine Steuereinrichtung für einen Antrieb zum Anpressen und Entfernen der Halsform und eine Steuereinrichtung für einen Antrieb zum Verändern des Austrittsspaltes der Ringdüse während des Entfernens der Halsform von der Ringdüse betätigbar sind, und bei der beim Abheben der Halsform von der Ringdüse eine Geschwindigkeitszunahme von Null an vorgesehen ist, während eines weiteren Entfernensabschnittes die Steuereinrichtungen tätig sind und die Steuereinrichtungen wegabhängig arbeiten.

Bei einer bekannten (DE-PS 24 26 730) Vorrichtung dieser Art, die nach dem PRESSBLOWER-Verfahren arbeitet, sind die Steuereinrichtungen mit Schaltern versehen, die von der sich entfernenden Halsform betätigt werden. Die Wanddickenänderungen werden stufenförmig vorgesehen. Es läßt sich die Wanddicke des Vorformlings in verschiedenen Bereichen verschieden gestalten und es lassen sich in relativ rascher Zeit recht starke Querschnittsschwankungen des Vorformlings erzeugen. Diese bekannte Vorrichtung ist zur Herstellung eines Vorformlings für einen Faltenbalg nur schlecht geeignet. Wenn nämlich ein Faltenbalg trotz seiner vielen und relativ großen Falten ausreichend konstante Wanddicke aufweisen soll, dann läßt sich das mit der bekannten schalterbetätigten Vorrichtung nicht erreichen, wobei wegen der Falten auch eine praktisch nicht zu verwirklichende große Zahl von Schaltern nötig ist. Es ist auch bekannt, (DE-PS 24 26 736), den Steuereinrichtungen dieser Vorrichtung statt der entlang dem Bewegungsweg der Halsform angeordneten Schalter ein elektronisch vorgegebenes Programm zuzuordnen. Wenn man ein solches elektronisches Programm rein zeitabhängig aufbaut, dann lassen sich die häufigen Wanddickenänderungen, die bei einem Vorformling für einen Faltenbalg nötig sind, ebenfalls nicht mit der nötigen Genauigkeit erzeugen, weil die übereinstimmung zwischen jeweiligem Stand des Programmes und jeweiliger Position der Halsform nicht ausreichend genau gewährleistet ist.

Dokument US-A-3,611,483 zeigt auch eine Vorrichtung gemäß dem Oberbegriff von Anspruch 1.

Eine Aufgabe der Erfindung ist es daher, eine Vorrichtung der eingangs genannten Art zu schaffen, mit der sich ein Vorformling für einen Faltenbalg, d.h. ein Vorformling mit pro Längeneinheit erheblich erhöhter Zahl von vergrößerten Wanddickenänderungen, mit vergrößerter Genauigkeit herstellen läßt. Die erfindungsgemäße Vorrichtung ist, diese Aufgabe lösend, durch die Merkmale des Anspruches 1 gekennzeichnet.

Es wird der Weg der Halsform bzw. der Abzugseinrichtung kontinuierlich gemessen, um abhängig von der jeweiligen Wegposition mittels des Rechners die zwei Größen: Düsenweite und Abzugsgeschwindigkeit einzustellen. Es wird ein Faltenbalg bzw. dessen Vorformling mit erhöhter Genauigkeit unter Einsatz der Wegmeßeinrichtung hergestellt, in der Regel aus einem thermoplastischen Eleastomer. Wichtig ist die häufige Änderung der Düsenweite während eines relativ dazu Gleichbleibens der Abzugsgeschwindigkeit. Es wird die Halsform mit einer von Anfang an gesteuerten Geschwindigkeit angefahren, was es zuläßt, die Dicke des Vorformlings unmittelbar anschließend an die Halsform genau festzulegen. Während eines über eine programmierte Wegstrecke gleichbleibenden Geschwindigkeitsverhaltens wird die Spaltweite programmiert geändert. die erfindungsgemäße Vorrichtung arbeitet nach dem PRESSBLOWER-Verfahren.

Einem gleichbleibenden Geschwindigkeitsverhalten, d.h. einer gleichbleibenden, zunehmenden oder abnehmenden Geschwindigkeit des Halsformabzuges ist eine Oszillation der Spaltweite überlagert. Die Täler und Höhen der sich wellenförmig (z.B. Sinuswellen) bzw. bogenförmig ändernden Dicke der Vorformlingswand sind in Abhängigkeit vom Abzugsweg durch die Düsenweite gegeben. Da der Faltenquerschnitt des zu erzeugenden Faltenbalges bekannt ist, läßt sich davon die Wellenform des Wandungsquerschnittes des Vorformlings ableiten. Die Profilgenauigkeit des erfindungsgemäßen Faltenbalges in Längsrichtung und die Rundumgenauigkeit sind verbessert, weil der Vorformling zwischen zentrierter Düse und halsform eingespannt abgezogen wird. Im Hinblick auf die erhöhte Genauigkeit sind die beiden hier in Betracht zu ziehenden Antriebe in der Regel hydraulisch, wobei hydraulische Regelventile vorgesehen sind.

Besonders zweckmäßig und vorteilhaft ist es, wenn die Wegmeßeinrichtung ein Ultraschall-Wegaufnehmer ist, bei dem in einem beweglichen Positionsmelder-Ringmagnet ein Meßrohr steckt, das einen Meßdraht aufnimmt und einem elektrischen Impulssender sowie einem Ultraschall-Impulsempfänger zugeordnet ist. Diese an sich bekannte Wegmeßeinrichtung arbeitet berühungslos, verschleißfrei, mit hoher Auflösung und verschmutzungsarm.

Der Faltenbalg weist häufig fünf Falten auf, so daß entspreend die oszillierend größer und kleiner gesteuerte Spaltweite in dem weiteren Entfernensabschnitt mindestens sechs Dickenhöhen und sechs Dickentiefen umfaßt bzw. bildet.

Durch die Wegmeßeinrichtung und den Rechner ist eine sehr feinfühlige Steuerung möglich. Besonders zweckmäßig und vorteilhaft ist es daher, wenn die oszillierend größer und kleiner gesteuerte Spaltweite streckenweise entsprechend einer geraden Schräge gesteuert ist. Diesem Düsenweitenverhalten entspricht ein Dünnerwerden oder Dickerwerden des Vorformlingsquerschnittes über eine gerade Schräge. Es werden also, bei Betrachtung des Vorformlingquerschnittes, nicht nur durchgehend gebogenen Wellen hergestellt, sondern auch Dickenzunahmen oder Dickenabnahmen über entsprechend kurze, gesteuerte gerade Schrägen. Die axiale Länge einer solchen Schräge am Vorformling ergibt in etwa den erwähnten Abstand zwischen Faltenberg und Faltental des Faltenbalges.

Der Faltenbalg, zu dessen Erzeugung die erfindungsgemäße Vorrichtung vorgesehen ist, kann im Hinblick auf die verschiedensten Einsatzzwecke vorgesehen sein. Besonders zweckmäßig und vorteilhaft ist es, wenn die Vorrichtung zwecks Erzeugung einer Achsmanschette eines Kraftfahrzeuges vorgesehen ist. Die Achsmanschette ist z.B. für achsseitigen oder für getriebeseitigen Einsatz vorgesehen. Für diese Verwendung sind nicht nur die Vorteile des erfindungsgemäßen Faltenbalges, der aus thermoplastischem Elastomer besteht, wichtig. Wichtig ist beim erfindungsgemäßen Faltenbalg auch die Genauigkeit der Endstücke, die sich durch die Vorgaben von Halsform und Ringdüse genauer fertigen lassen. Diese Genauigkeit der Faltenbalg-Endstücke ist auch bei Achsmanschetten gefordert.

Die erfindungsgemäße Vorrichtung dient dazu, Wanddickenänderungen in vergrößerter Zahl mit vergrößerten radialen Abmessungen mit vergrößerter Genauigkeit herzustellen. Dies läßt sich verbessert erreichen, wenn in der Ringdüse zum Verändern des Austrittsspaltes ein axial verstellbarer Düsenkegel vorgesehen ist und/oder wenn ein Kunststoff durch die Ringdüse drückender geradlinig beweglicher Preßkolben und eine Steuereinrichtung für einen Antrieb zum Verändern der Geschwindigkeit des Preßkolbens vorgesehen sind.

Dabei ist es besonders zweckmäßig und vorteilhaft, wenn die Ringdüse mit einer kontinuierlich arbeitenden Wegmeßeinrichtung verbunden ist, die auf den Rechner arbeitet, der auf den Antrieb des Düsenkegel arbeitet, und/oder wenn der Preßkolben mit einer kontinuierlich arbeitenden Wegmeßeinrichtung verbunden ist, die auf den Rechner arbeitet, der auf den Antrieb des Preßkolbens arbeitet, und wenn jeweils diese Wegmeßeinrichtung ein Ultraschall-Wegaufnehmer ist, bei dem in einem beweglichen Positionsmelder-Ringmagnet ein Meßrohr steckt, das einen Meßdraht aufnimmt und einem elektrischen Impulssender sowie einem Ultraschall-Impulsempfänger zugeordnet ist. Es werden also alle drei für die Gestaltung des Vorformlings wichtigen Stellgrößen der Vorrichtung mit dem Ultraschall-Weggeber gemessen und über den Rechner gesteuert, was die verbesserte Genauigkeit in einem größeren Ausmaß erreichen läßt.

In der Zeichnung ist eine bevorzugte Ausführungsform der Erfindung dargestellt und zeigt
- Fig. 1: im Schnitt eine Vorrichtung zum Herstellen eines Vorformlings zum Blasformen eines Faltenbalges,
- Fig. 2: Steuereinrichtungen der Vorrichtung gemäß Fig. 1,
- Fig. 3: eine Wegmeßeinrichtung der Vorrichtung gemäß Fig. 1 und
- Fig. 4: im Schnitt einen mit der Vorrichtung gemäß Fig. 1 erzeugten Faltenbalg.

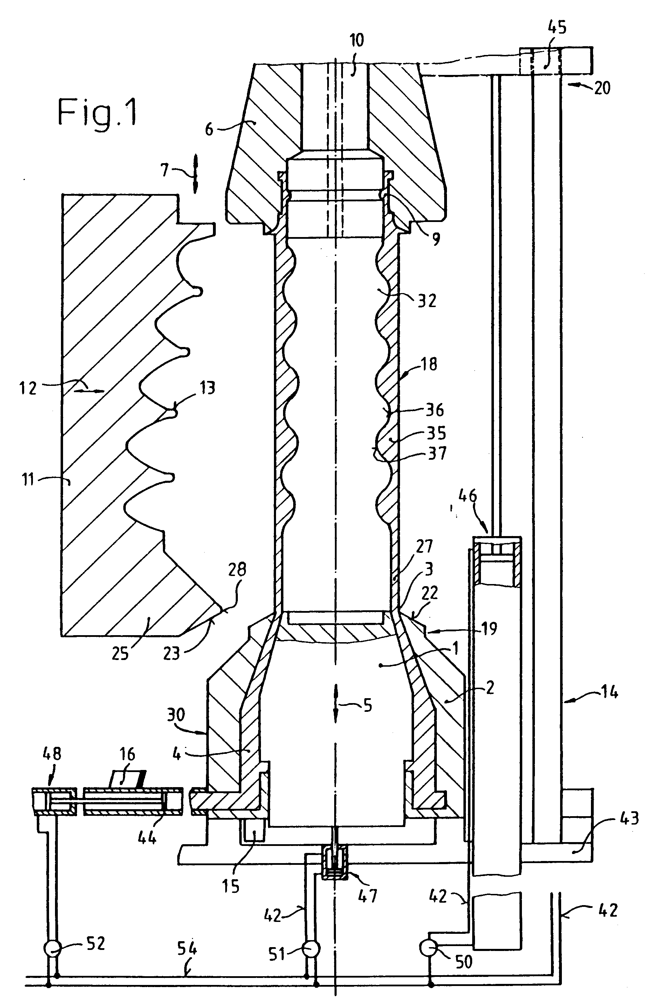

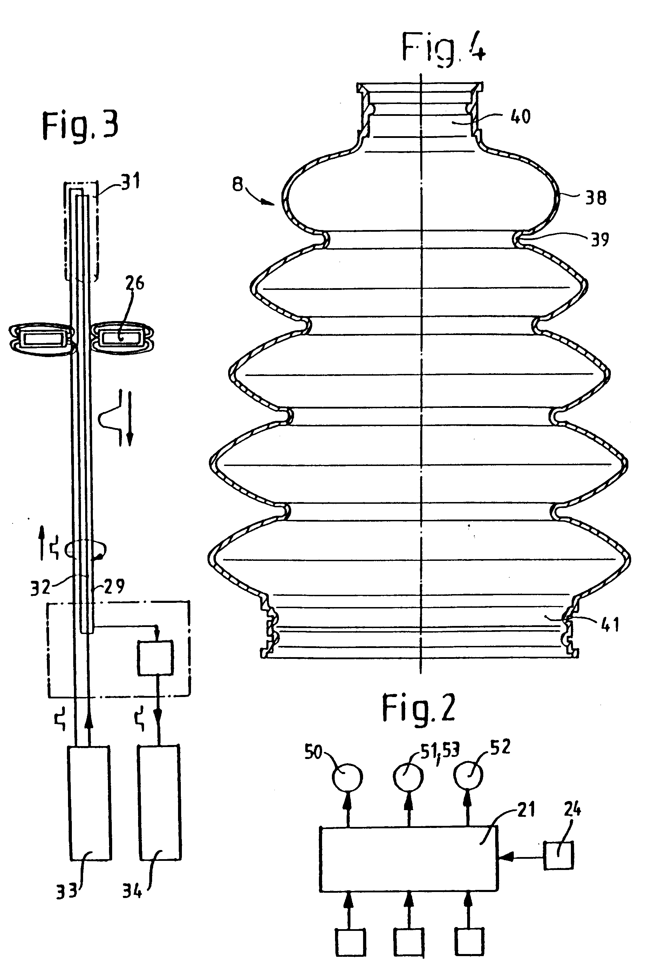

Bei der Vorrichtung gemäß Fig. 1 ist unten eine Ringdüse 30 vorgesehen, die von einem Düsenkegel 1 und einem diesen konzentrisch umgebenden Düsenmundstück 2 gebildet ist. Düsenkegel 1 und Düsenmundstück 2 bilden oben einen ringspaltartigen Austrittsspalt 3, dem über einen Ringraum zwischen Düsenkegel und Düsenmundstück Kunststoff 4 zugeführt wird. Während das Düsenmundstück 2 ortsfest, d.h. feststehend angeordnet ist, ist der innen angeordnete Düsenkegel 1 gemäß einem Pfeil 5 auf- und abbewegbar. Gegenüber der Ringdüse 30 ist oben eine Abzugseinrichtung vorgesehen, die auch Halsform 6 (Spritzwerkzeug) genannt wird und gemäß einem Pfeil 7 auf- und abbewegbar ist. Die Halsform 6 bildet eine nach unten offene Aussparung 9, die in den Austrittsspalt 3 übergeht, wenn die Halsform 6 auf der Ringdüse 30 sitzt. Die Aussparung 9 umschließt ein vorderes Endstück eines Blasdornes 10. Sodann ist eine Blasformhälfte 11 einer Blasform angedeutet, die geschlossen bzw. geöffnet wird, indem die Blasformhälften in waagerechter Richtung gemäß einem Pfeil 12 hin- und herbewegt werden. Die Blasform weist an der Innenseite Konturen 13 auf. Diese Konturen 13 sollen bei geschlossener Blasform den Außenkonturen des Faltenbalges 8, wie er in Fig. 4 dargestellt ist, entsprechen.

Die Halsform 6 ist zunächst abgesenkt und sitzt mit dem Ende der Blasnadel auf dem Mittenbereich des Düsenkegels 1, wobei in der Aussparung 9 ein Hals 17 aus Kunststoff gepreßt wird. Bewegt sich die Halsform 6 nun nach oben unter weiterem Auspressen von Kunststoff durch den Austrittsspalt 3, so entsteht ein Vorformling 18. Der Beginn 19 dieser Vorformling-Herstellung liegt vor, wenn die Halsform 6 unten auf der Ringdüse 30 sitzt. Das Ende 20 der Vorformling-Herstellung liegt vor, wenn die Halsform 6 die in Fig. 1 dargestellte obere Stellung einnimmt.

Das Düsenmundstück weist in seinem oberen Bereich eine Schräge 22 auf, auf welche die Blasformhälften 11 mit einer entsprechendenschrägen Auflagefläche 23 aufsetzen, wenn sie geschlossen werden. Diese Auflagefläche 23 ist unten an einem Ansatz 25 vorgesehen. Die Ansätze 25 der beiden Blasformhälften 11 schieben sich beim Schließen der Blasform gegen die Schräge 22 des Düsenmundstücks 2. Der Vorformling wird anschließend in der Blasform 11 zur Endform aufgeblasen. Da der runde Vorformling nicht flach gequetscht wird, verstreckt sich der Kunststoff im Umfang gleichmäßig. Dadurch kann das Abfallteil kleiner als beim Extrusionsblasen gehalten werden. In nicht gezeigter Weise ist jede Blasformhälfte 11 auf einer waagerechten Schiene verschiebbar, die an einem Ständer angebracht ist. Der Ständer trägt auch eine Blasform-Betätigungseinrichtung, die zwei doppelt wirkende Kolben-Zylinder-Einrichtungen umfaßt, von denen jeweils eine an einer Blasformhälfte angreift. Den Kolben-Zylinder-Einrichtungen der Blasform-Betätigungseinrichtung ist Druckflüssigkeit über Leitungen zuführbar. Gemäß Fig. 1 trägt eine Plattform 43 einen Antrieb 46, der auch an einem Ansatz 45 der Halsform 6 zwecks Bewegung der Halsform angreift. Der Antrieb 46 ist ebenfalls als Kolben-Zylinder-Einrichtung ausgebildet, der über Leitungen 42 Druckflüssigkeit zuführbar ist.

Die Plattform 43 trägt auch einen Antrieb 47, der zwei Kolben-Zylinder-Einrichtungen umfaßt und an dem Düsenkegel 1 angreift. Auch diesen Kolben-Zylinder-Einrichtungen ist jeweils über die Leitungen 42 Druckflüssigkeit zuführbar. Es ist weiterhin ein Preßkolben 44 vorgesehen, an dem ein Antrieb 48 angreift, der als Kolben-Zylinder-Einrichtung ausgebildet ist, wobei der Preßkolben dazu dient, den Kunststoff 4 in Richtung zum Austrittsspalt 3 zu fördern. Die Leitungen 42 münden jeweils in einem hydraulischen Regelventil 50, 51, 52, mit dem nicht nur der Durchfluß von Druckflüssigkeit abstellbar und einstellbar ist, sondern auch die Menge der pro Zeiteinheit durchfließenden Druckflüssigkeit einstellbar bzw. regelbar ist. Die Regelventile sind jeweils an Hauptleitungen 54 angeschlossen, über welche die Druckflüssigkeit der Vorrichtung zugeführt wird.

Es ist der Halsform 6 eine Wegmeßeinrichtung 14, dem Düsenkegel 1 eine Wegmeßeinrichtung 15 und dem Preßkolben 44 eine Wegmeßeinrichtung 16 zugeordnet, die in Fig. 1 nur schematisch angedeutet sind. Diese Wegmeßeinrichtungen 14, 15, 16 arbeiten gemäß Fig. 2 auf einen Rechner 21, dem aus einem Speicher 24 ein Programm zugeführt wird, das auf einen bestimmten zu erzeugenden Faltenbalg bzw. einen entsprechend herzustellenden Vorformling abgestellt ist. Der Rechner 21 stellt die Regelventile 50, 51 und 52 entsprechend dem Programm und den von den Wegmeßeinrichtungen abgegebenen Daten ein.

Die hier dreifach verwendete Wegmeßeinrichtung ist in Fig. 3 verdeutlicht und ist ein Ultraschall-Wegaufnehmer. Dieser umfaßt einen beweglichen permanentmagnetischen Ringmagnet 26, der mit dem beweglichen Teil verbunden ist, dessen Weg bzw. Position in Bezug auf einen Nullpunkt zu messen ist. Der Ringmagnet 26 umfaßt ein Meßrohr 29, das ferromagnetisch ist und ortsfest angeordnet ist. Das Meßrohr 29 ist einerends von einem Schalldämpfungsmittel 31 abgeschlossen und nimmt einen Meßdraht 32 auf, der anderenends von einem elektrischen Impulssender 33 gespeist wird. Die elektrische Impulse laufen unter Erzeugung eines kreisförmigen Magnetfeldes entlang dem Meßdraht 32, bis das Magnetfeld auf den Ringmagnet 26 trifft, der daraufhin einen Schallimpuls abgibt, der von einem Ultraschall-Impulsempfänger 34 aufgenommen wird. Die zeitliche Differenz zwischen Impulssendung und Impulsempfang ist ein Maß für den Stand des beweglichen Teiles bzw. des Ringmagneten 26.

Der fertige Vorformling 18 weist gemäß Fig. 1 über die Länge verteilt z.B. sechs Verdickungen 35 des Wandquerschnittes auf, die jeweils von einem Teil 36 über einen Berg 37 zu einem Tal verlaufen und die dem Querschnitt insgesamt einen wellenförmigen Verlauf geben. Der daraus hergestellte Faltenbalg 8 weist ausgeprägte Falten 38 auf, die durch ausgeprägte Einschnürungen 39 getrennt sind. Der Faltenbalg 8 weist zwei Endstücke 40, 41 auf, deren inneren Abmessungen hochgenau erzeugt sind.

## Patentansprüche

1. Vorrichtung zum Herstellen eines rohrähnlichen Vorformlings (18) mit entlang seiner Länge unterschiedlichen Querschnitten zum Blasformen eines Hohlkörpers (8) aus einem thermoplastschen Kunststoff,
bei der der Kunststoff (4) zunächst in eine Aussparung (9) einer an einer Ringdüse (30) für den Kunststoff anliegenden Halsform (6) gepreßt und dann unter Entfernen der Halsform (6) von der Ringdüse (30) zu dem Vorformling (18) geformt wird,
bei der eine Steuereinrichtung (14, 50) für einen Antrieb (46) zum Auspressen und Entfernen der Halsform (6) und eine Steuereinrichtung (15, 51) für einen Antrieb (47) zum Verändern des aus der Ringdüse (30) austretendem Kunststoffs während des Entfernens der Halsform (6) von der Ringdüse (30) betätigbar sind, bei der beim Abheben der Halsform (6) von der Ringdüse (30) eine Geschwindigkeitszunahme von Null an vorgesehen ist, während eines weiteren Entfernensabschnittes die Steuereinrichtungen (14, 50; 15, 51) tätig sind und die Steuereinrichtungen wegabhängig arbeiten, und
bei der die Halsform (6) mit einer kontinuierlich arbeitenden Wegmeßeinrichtung (14) verbunden ist, die auf einen während das Entfernens der Halsform (6) ständig aktiven bzw. wirksamen Rechner (21) arbeitet, dar in Verbindung mit den beiden Steuereinrichtungen (14, 50; 15, 51) vorgesehen ist,
**dadurch gekennzeichnet,**
daß der dem austretenden Kunststoff (4) zugeordnete Antrieb (47) zum Verändern des Austrittsspaltes (3) der Ringdüse (30) vorgesehen ist und daß zwecks Erzeugung eines Faltenbalg-Hohlkörpers (8) für den Querschnittsverlauf des herzustellenden Vorformlings (18) über dessen gesamte Länge der Rechner (21) mit einem Programm (24) versehen ist, das abhängig vom Weg der sich entfernenden Halsform (6) derart aufgebaut ist,
daß die Geschwindigkeitszunahme beim Abheben gesteuert ist und
daß während des weiteren Entfernensabschnittes einem kontinuierlich gesteuerten Geschwindkeitsverhalten dar Halsform (6) eine oszillierend größer und kleiner gesteuerte Spaltweite derart überlagert ist,
daß die Dicke der sich bildenden Vorformlingswand sich wellenförmig, über Täler (36) und Höhen (37), ändert.

2. Vorrichtung nach Anspruch 1, **dadurch gekennzeichnet,** daß die Wegmeßeinrichtung (14) ein Ultraschall-Wegaufnehmer ist, bei dem in einem beweglichen Positionsmelder-Ringmagnet (26) ein Meßrohr (29) steckt, das einen Meßdraht (32) aufnimmt und einem elektrischen Impulssender (33) sowie einem Ultraschall-Impulsempfänger (34) zugeordnet ist.

3. Vorrichtung nach Anspruch 1 oder 2, **dadurch gekennzeichnet,** daß die oszillierend größer und kleiner gesteuerte Spaltweite in dem weiteren Entfernensabschnitt mindestens sechs Dickeberge (37) und Dicketäler (36) umfaßt.

4. Vorrichtung nach Anspruch 1, 2 oder 3, **dadurch gekennzeichnet,** daß die oszillierend größer und kleiner gesteuerte Spaltweite streckenweise entsprechend einer geraden Schräge gesteuert ist.

5. Vorrichtung nach einem der vorhergehenden Ansprüche, **dadurch gekennzeichnet,** daß sie zwecks Erzeugung einer Achsmanschette eines Kraftfahrzeuges vorgesehen ist.

6. Vorrichtung nach einem der vorhergehenden Ansprüche, wobei in der Ringdüse zum Verändern des Austrittsspaltes ein axial verstellbarer Düsenkegel vorgesehen ist, **dadurch gekennzeichnet,** daß die Ringdüse (30) mit einer kontinuierlich arbeitenden Wegmeßeinrichtung (15) verbunden ist, die auf den Rechner (21) arbeitet, der auf den Antrieb (47) des Düsenkegels (1) arbeitet, und daß auch diese Wegmeßeinrichtung ein Ultraschall-Wegaufnehmer ist, bei dem in einem beweglichen Positionsmelder-Ringmagnet ein Meßrohr steckt, das einen Meßdraht aufnimmt und einem elektrischen Impulssender sowie einem Ultraschall-Impulsempfänger zugeordnet ist.

7. Vorrichtung nach einem der vorhergehenden Ansprüche, wobei ein Kunststoff durch die Ringdüse drückender geradlinig beweglicher Preßkolben und eine Steuereinrichtung für einen Antrieb zum Verändern der Geschwindigkeit des Preßkolbens vorgesehen sind, **dadurch gekennzeichnet,** daß der Preßkolben (44) mit einer kontinuierlich arbeitenden Wegmeßeinrichtung (16) verbunden ist, die auf den Rechner (21) arbeitet, der auf den Antrieb (48) des Preßkolbens (44) arbeitet, und daß auch diese Wegmeßeinrichtung ein Ultraschall-Wegaufnehmer ist, bei dem in einem beweglichen PositionsmelderRingmagnet ein Meßrohr steckt, das einen Meßdraht aufnimmt und einem elektrischen Impulssender sowie einem Ultraschall-Impulsempfänger zugeordnet ist.

## Claims

1. Apparatus for making a tubular preform (18) with varying cross sections along its length for blowmoulding a hollow article (8) from a thermoplastic, in which the plastic (4) is first forced into a recess (9) in a neck mould (6) adjacent to an annular nozzle (30) for the plastic and then is moulded into the preform (18), the neck mould (6) being removed from the annular nozzle (30), in which a control unit (14, 50) can actuate a drive (46) for pressing out and removing the neck mould (6) and a control unit (15, 51) can actuate a drive (47) for altering the plastic emerging from the annular nozzle (30) while the neck mould (6) is being removed from the annular nozzle (30), in which an increase in speed from zero is provided when the neck mould (6) is removed from the annular nozzle (30), the control units (14, 50; 15, 51) are active during a further removal stage and the control units operate in a path-dependent manner, and in which the neck mould (6) is connected to a continuously operating position measuring device (14) which acts on a computer (21) which is constantly active or effective during the removal of the neck mould (6) and is provided in connection with the two control units (14, 50; 15, 51), characterised in that the drive (47) associated with the emergent plastic (4) is provided for altering the nozzle gap (3) of the annular nozzle (30) and that, in order to produce a hollow article (8) for bellows, the computer (21) is provided with a program (24) for the cross-sectional contour of the preform (18) to be made over its entire length, this program being designed so that it is dependent on the path of the neck mould (6) being removed in such a manner that the increase in speed during removal is controlled and that, during the further removal stage, a gap width controlled to an oscillating greater or lesser extent is superimposed upon continuously controlled speed behaviour of the neck mould (6) in such a manner that the thickness of the preform wall forming varies in an undulating manner via peaks (37) and troughs (36).

2. Apparatus according to claim 1, characterised in that the position measuring device (14) is an ultrasonic position transducer, in which a measuring tube (29) is placed in a movable position-indicating annular magnet (26), said measuring tube receiving a measuring wire (32) and being associated with an electric pulse transmitter (33) and an ultrasonic pulse receiver (34).

3. Apparatus according to claim 1 or claim 2, characterised in that the gap width controlled to an oscillating greater or lesser extent includes at least six thickness peaks (37) and thickness troughs (36) in the further removal stage.

4. Apparatus according to claim 1, 2 or 3, characterised in that gap width controlled to an oscillating greater or lesser extent is controlled in sections in accordance with a straight incline.

5. Apparatus according to one of the preceding claims, characterised in that it is provided in order to produce axle bellows for a motor vehicle.

6. Apparatus according to one of the preceding claims, in which an axially adjustable nozzle cone is provided in the annular nozzle for altering the nozzle gap, characterised in that the annular nozzle (30) is connected to a continuously operating position measuring device (15) which acts on the computer (21) which acts on the drive (47) of the nozzle cone (1), and that this position measuring device is also an ultrasonic position transducer, in which a measuring tube is placed in a movable position-indicating annular magnet, said measuring tube receiving a measuring wire and being associated with an electric pulse transmitter and an ultrasonic pulse receiver.

7. Apparatus according to one of the preceding claims, in which a pressing ram movable in a straight line and pressing plastic through the annular nozzle and a control unit for a drive for altering the speed of the pressing ram are provided, characterised in that the pressing ram (44) is connected to a continuously operating position measuring device (16) which acts on the computer (21) which acts on the drive (48) of the pressing ram (44), and that this position measuring device is also an ultrasonic position transducer, in which a measuring tube is placed in a movable position-indicating annular magnet, said measuring tube receiving a measuring wire and being associated with an electric pulse transmitter and an ultrasonic pulse receiver.

## Revendications

1. Dispositif pour la réalisation d'une préforme (18) semblable à un tube, ayant le long de sa longueur des sections transversales différentes pour le formage par soufflage d'un corps creux (8) en une matière synthétique thermoplastique, lors duquel, la matière synthétique (4) est tout d'abord pressée dans un évidement (9) d'une forme de col (6) adjacente à une buse annulaire (30) pour la matière synthétique, et, ensuite est formée avec éloignement de la forme de col (6) de la buse annulaire (30) en la préforme (18), lors duquel, un agencement de commande (14, 50), pour un entraînement (46) pour le pressage et l'éloignement de la forme de col (6), et un agencement de commande (15, 51), pour un entraînement (47) pour la modification de la matière synthétique sortant hors de la buse annulaire (30), sont susceptibles d'être actionnés durant l'éloignement de la forme de col (6) de la buse annulaire (30), lors duquel, lors du soulèvement de la forme de col (6) de la buse annulaire (30), un accroissement de vitesse à partir de zéro est prévu, tandis qu'à une autre section d'éloignement, les agencements de commande (14, 50 ; 15, 51) sont actionnés et les agencements de commande travaillent en fonction du trajet, et lors duquel, la forme de col (6) est reliée avec un agencement de mesure de trajet (14) travaillant de façon continue, qui travaille sur un calculateur (21) continuellement actif ou bien efficace durant l'éloignement de la forme de col (6), qui est prévu en liaison avec les deux agencements de commande (14, 50 ; 15, 51), caractérisé en ce que, l'entraînement (47) associé à la matière synthétique (4) sortante est prévu pour le changement de l'interstice de sortie (3) de la buse annulaire (30), et en ce que, dans le but d'engendrement d'un corps creux du genre soufflet (8), pour l'allure de section transversale de la préforme (18) à réaliser, sur l'ensemble de la longueur de celle-ci, le calculateur (21) est pourvu d'un programme (24), qui, en fonction du trajet de la forme de col (6) s'éloignant, est constitué de telle sorte, que l'accroissement de vitesse est commandé lors du soulèvement et, que, durant la section d'éloignement ultérieure, à un comportement de vitesse commandé de façon continue de la forme de col (6), est superposée de telle sorte une largeur d'interstice commandée fluctuante plus ou moins grande, que l'épaisseur de la paroi de préforme se formant se change en forme d'ondulation, en passant par des creux (36) et des sommets (37).

2. Dispositif selon la revendication 1, caractérisé en ce que l'agencement de mesure de trajet (14) est un capteur de trajet à ultrason, lors duquel, un tube de mesure (29) s'enfiche dans un aimant annulaire d'information de position (26) mobile, qui accueille un fil de mesure (32) et est associé à un émetteur d'impulsion (33) électrique, ainsi qu'à un récepteur d'impulsion d'ultrason (34).

3. Dispositif selon la revendication 1 ou la revendication 2, caractérisé en ce que la largeur d'interstice commandée fluctuante plus ou moins grande, dans la section d'éloignement ultérieure, comprend au moins six sommets d'épaisseur (37) et creux d'épaisseur (36).

4. Dispositif selon la revendication 1, 2 ou 3, caractérisé en ce que la largeur d'interstice commandée fluctuante plus ou moins grande, est commandée, par tronçons, en correspondant à une partie inclinée rectiligne.

5. Dispositif selon une des précédentes revendications, caractérisé en ce qu'il est prévu dans le but d'engendrement d'une manchette d'essieu d'un véhicule automobile.

6. Dispositif selon une des précédentes revendications, un cône de buse déplaçable axialement étant prévu dans la buse annulaire pour le changement de l'interstice de sortie, caractérisé en ce que la buse annulaire (30) est reliée avec un agencement de mesure de trajet (15) travaillant de façon continue, qui travaille sur le calculateur (21), qui travaille sur l'entraînement (47) du cône de buse (1), et en ce qu'aussi cet agencement de mesure de trajet est un capteur de trajet à ultrason, lors duquel, un tube de mesure est enfiché dans un aimant annulaire d'information de position mobile, qui accueille un fil métallique de mesure et est associé à un émetteur d'impulsion électrique, ainsi qu'à un récepteur d'impulsion d'ultrason.

7. Dispositif selon une des précédentes revendications, un piston de pression mobile rectiligne poussant une matière synthétique à travers la buse annulaire et un agencement de commande pour un entraînement pour le changement de la vitesse du piston de pression étant prévu, caractérisé en ce que le piston de pression (44) est relié avec un agencement de mesure de trajet (16) travaillant de façon continue, qui travaille sur le calculateur (21), qui travaille sur l'entraînement (48) du piston de pression (44), et en ce qu'aussi cet agencement de mesure de trajet est un capteur de trajet à ultrason, lors duquel, un tube de mesure s'enfiche dans un aimant annulaire d'information de position mobile, qui accueille un fil métallique de mesure et est associé à un émetteur d'impulsion électrique, ainsi qu'à un récepteur d'impulsion d'ultrason.
